**Europäisches Patentamt**

**European Patent Office**

**Office européen des brevets**

(11) Veröffentlichungsnummer: **0 110 102**
**B1**

(12) **EUROPÄISCHE PATENTSCHRIFT**

(45) Veröffentlichungstag der Patentschrift:
14.01.87

(51) Int. Cl.⁴: **B 29 C 65/02,** F 16 L 41/00, F 16 L 47/00 // B29L31/24

(21) Anmeldenummer: **83110476.5**

(22) Anmeldetag: **20.10.83**

(54) **Verfahren zur Herstellung einer Formschlauchverzweigung aus Gummi und nach diesem Verfahren hergestellter Schlauch.**

(30) Priorität: **26.10.82 DE 3239623**

(43) Veröffentlichungstag der Anmeldung:
**13.06.84 Patentblatt 84/24**

(45) Bekanntmachung des Hinweises auf die Patenterteilung:
**14.01.87 Patentblatt 87/3**

(84) Benannte Vertragsstaaten:
**AT BE DE FR GB IT**

(56) Entgegenhaltungen:
**DE-B-2 223 529**
**DE-B-2 230 719**
**DE-C-2 443 824**
**GB-A-2 007 790**
**US-A-3 976 314**

(73) Patentinhaber: **METZELER KAUTSCHUK GMBH,**
**Gneisenaustrasse 15, D-8000 München 50 (DE)**

(72) Erfinder: **Caspari, Horst, Poststrasse 50, D-6800 Mannheim 41 (DE)**
Erfinder: **Englert, Walter, Kleingemünder Strasse 33, D-6900 Heidelberg 1 (DE)**
Erfinder: **Janetzko, Dieter, Fred- Joachim- Schoeps- Strasse 31, D-6800 Mannheim 71 (DE)**

(74) Vertreter: **Michelis, Theodor, Dipl.- Ing., Gneisenaustrasse 15, D-8000 München 50 (DE)**

## Beschreibung

Die Erfindung betrifft ein Verfahren zur Herstellung einer Verzweigung bei Formschläuchen aus Gummi entsprechend dem Oberbegriff des Patentanspruchs 1.

Zur Herstellung derartiger Schlauchverzweigungen ist es z.B. aus der DE-C-24 45 824 bekannt, einen unvulkanisierten Schlauchrohling mit einer Wandöffnung zu versehen, den Rand der Wandöffnung nach außen aufzubördeln und dort ein weiteres Schlauchstück aufzusetzen, um dann die so gebildete Schlauchverzweigung in eine Form aus in zwei Schalenteile geteilte Muffe und einem innenliegenden Dorn einzulegen und auszuvulkanisieren.

Ferner ist es aus der DE-B- 22 30 719 bekannt, einen bereits fertigen, vulkanisierten Schlauch mit einer seitlichen Lochung zu versehen und dann in einer Form nach dem Injektionsverfahren einen Schlauchabzweig anzuspritzen bzw. aus unvulkanisiertem Schlauchrohmaterial eine Verbindung zu einem anschließenden Abzweigschlauch herzustellen und das ganze auszuvulkanisieren.

Die Herstellung derartiger Schlauchverzweigungen nach einem der vorstehend beschriebenen Verfahren bereitet jedoch erhebliche Schwierigkeiten, wenn es sich dabei um Schläuche mit großen Längen handelt, bei denen insbesondere die Abzweigstelle mehr als etwa 200 mm von einem der Schlauchenden des Hauptzweiges entfernt liegt. Es ist dann nämlich sehr schwierig, wenn nicht gar unmöglich, mit einem im Bereich der Abzweigöffnung liegenden Formkern innerhalb des Schlauches zu arbeiten, da dieser dann nur sehr schwer wieder entfernt werden kann. Dies gilt insbesondere auch dann, wenn die Schläuche starke Krümmungen oder abnehmenden Innendurchmesser hinter der Schlauchverzweigungsstelle aufweisen.

Ferner ist aus der GB-A-20 07 790, welche den Obergriff des Anspruchs 1 bildet, eine Schlauchverzweigung mit drei Abzweigen bekannt, wonach die drei Schlauchabschnitte auf ein entsprechendes Y-förmiges Abzweigungsstück aus starrem Material aufgeschoben und von außen über entsprechende, verschraubbare Klemmstücke gegen das Verzweigungsstück geklemmt werden. Insbesondere bei dauernd wechselnden Schwellbelastungen hohen Druckes besteht hier aber die Gefahr eines Undichtwerdens, abgesehen davon, daß diese Verbindung sehr groß baut.

Der Erfindung liegt daher die Aufgabe zugrunde, ein Herstellungsverfahren für eine derartige Verzweigung von Formschläuchen größerer Länge, bei denen die Abzweigstellen von innen her nicht mehr zugänglich sind, zu schaffen, wobei die Verzweigung absolut lecksicher auch nach längerem Gebrauch in verschiedenen Temperaturbereichen sein sollte und eine ausreichende Haftung bei mechanischer Beanspruchung besitzen sollte.

Die Lösung dieser Aufgabe erfolgt erfindungsgemäß nach den kennzeichnenden Merkmalen des Anspruchs 1.

Durch die Verwendung eines derartigen Rohrstückes aus massivem Material als eigentliches Verzweigungsstück, das beispielsweise T-förmig oder in jeder beliebigen anderen Abzweigkonfiguration ausgeführt sein kann und dabei eine Art verlorenen Formkern bildet, sowie einer vorläufigen Aufteilung der zu verbindenden Schläuche in die entsprechende Anzahl einzelner Schlauchstücke, kann somit an jeder beliebigen Stelle eines Schlauches eine Schlauchverzweigung beliebiger form auf einfache Weise geschaffen werden, die allen an sie gestellten Anforderungen genügt.

Zweckmäßigerweise wird dabei als vulkanisierbare Klebermasse ein folienartiger Streifen aus dem Schlauchrohmaterial oder eine entsprechende Kleberlösung verwendet.

Darüberhinaus ist es von Vorteil, wenn der freiliegende Bereich des Verzweigungsrohrstückes zwischen den aufgeschobenen Enden der Schlauchabschnitte im Injektionsverfahren mit Schlauchrohmaterial ausgefüllt und zur zusätzlichen Verbindung der Schläuche ausvulkanisiert wird.

Ferner betrifft die Erfindung eine nach diesem Verfahren hergestellte Verzweigung von Formschläuchen aus Gummi entsprechend den Merkmalen des Anspruchs 4.

Das Verzweigungsrohrstück kann dabei T-förmig oder kreuzförmig ausgebildet sein oder aber auch mehrere, in einer oder mehreren Ebenen liegende Abzweigstutzen aufweisen. Bei letzterer Ausführungsform kann dabei mindestens einer der Abzweigstutzen in einem von 90° abweichenden Winkel abzweigen.

Anhand einer schematischen Zeichnung sind Aufbau und Wirkungsweise eines Ausführungsbeispiels nach der Erfindung näher erläutert. Dabei zeigen:

Fig. 1 einen Querschnitt durch ein beispielsweise T-förmiges Rohrstück mit aufgeschobenen Schlauchabschnitten vor der Vulkanisation und

Fig. 2 einen Querschnitt durch eine fertige Schlauchverzweigung.

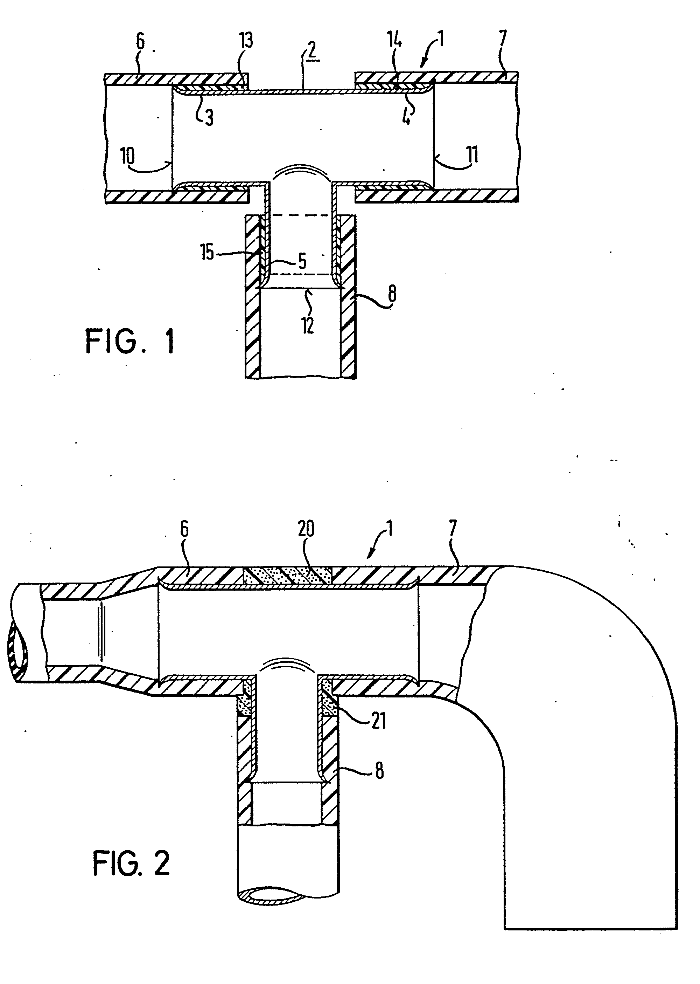

In Fig. 1 und 2 ist als einfaches Beispiel ein Schlauch für eine Verzweigung mit einem einzigen Abzweig, d.h. eine T-förmige Schlauchverzweigung, gezeigt, da hieran das erfinderische Prinzip am einfachsten erläutert werden kann. Wie dabei aus Fig. 1 zu ersehen ist, wird die T-förmige Verweigung 1 primär durch ein T-förmiges Verzweigungs-Rohrstück 2 mit den freien Rohrsrutzen 3, 4, und 5 gebildet, wobei der Rohrstutzen 5, der den eigentlichen Abzweig bildet, im Winkel von 90° angesetzt ister kann aber auch in jedem beliebigen anderen Winkel entsprechend der geforderten Ausgestaltung des Abzweigs an das Hauptrohr angesetzt werden. Dieses Verzweigungs-Rohrstück soll nunmehr mit den die fertige Verzweigung 1 bildenden einzeln vorliegenden Schlauchabschnitten 6, 7, und 8 durch Vulkanisation verbunden werden.

Die Schwierigkeit dieser Verbindung besteht darin, daß eine Vulkanisation wie bei herkömmlichen Gummi-Metall-Verbindungen, bei denen es sich meist um die Verbindung ebener Flächen oder um die Verbindung eines noch unvulkanisierten Kautschukmaterials mit einem Metallteil handelt, nicht möglich ist, da hier die erforderliche Anpressung des Gummimaterials an die Metalloberfläche wegen der zylindrischen Gestaltung beider Teile entweder zu einer Faltenbildung des Gummischlauches oder zum Abheben des Schlauches auf einer Seite des Rohrstückes führen würde. Bei einer entsprechend engen Passung von Schlauchinnendurchmesser und Rohrstückaußendurchmesser würden aber bei Aufschieben des Schlauches auf das jeweilige Rohrende die unbedingt erforderlichen Vulkanisationshilfsmittel vom aufgeschobenen Schlauchende weggedrückt, so daß eine Haftung nicht mehr gewährleistet wäre.

Um diese Schwierigkeiten zu umgehen, ist aber erfindungsgemäß vorgesehen, daß einmal die Stirnkanten 10, 11 und 12 der Rohrstutzen 3, 4 und 5 geringfügig nach außen aufgeweitet sind und daß im auszuvulkanisierten Bereich die Außenseiten der Rohrenden 3, 4 und 5 mit folienartigen Streifen 13, 14 und 15 aus vulkanisiebarem Schlauchrohmaterial als Klebermasse umwickelt oder mit einer entsprechenden Kleberlösung gleichartiger Gummiqualität beschichtet werden. Wenn jetzt die Schlauchabschnitte 6, 7 und 8 über die aufgeweiteten Stirnflächen 10, 11, und 12 auf die Rohrstückenden 3, 4 und 5 aufgeschoben werden, so verbleibt zunächst genügend "Luft" zwischen den Rohrstutzen 3,'4 und 5 und den Schlauchabschnitten 6, 7 und 8, um ein Wegschieben der folienartigen Klebermasse 13, 14 und 15 zu verhindern, ohne daß anschließend zwischen den sich wieder elastisch zusammenziehenden Schlauchenden und der Klebermasse bzw. dem Rohrstutzen zu viel Spiel verbleibt.

Selbstverständlich sind die entsprechenden Bereiche des T-förmigen Rohrstückes 2 vor dem Versehen mit der Klebermasse 13, 14 bzw. 15 noch mit einem handelsüblichen Primer und einem entsprechenden Haftvermittler zu versehen und zweckmäßigerweise die aufzulegenden folienstreifen sowie die auf der Innenseite aufgerauhten Schlauchenden beispielsweise mit Toluol anzulösen.

Nachdem nun das T-förmige Rohrstück 2 mit den Schlauchabschnitten 6, 7 und 8 in der angegebenen Weise konfektioniert ist, wird die so gebildete Verzweigung 1 in eine entsprechende, nicht näher dargestellte Einspritzform eingelegt und bei einer vorgegebenen Temperatur vulkanisiert, um eine feste und dauerhafte Verbindung zwischen den Schlauchabschnitten 6, 7 und 8 und den Rohrstutzen 3, 4 und 5 des T-förmigen Rohrstückes 2 zu gewährleisten.

Grundsätzlich ist es möglich, die so hergestellte Verzweigung 1 in der jetzt vorliegenden Form zu verwenden, da Haftung und Dichtigkeit zwischen Rohrstück 2 und den Schlauchenden 6, 7 und 8 voll ausreichend ist. Es hat sich jedoch als zweckmäßig herausgestellt, die freiliegenden Bereiche des Rohrstückes 2 ebenfalls noch zu ummanteln, um damit auch eine zusätzliche Verbindung der Schlauchabschnitte 6, 7 und 8 herzustellen. Dazu wird wie aus dem Teilquerschnitt nach Fig. 2 durch eine fertige Schlauchverzweigung 1 zu ersehen ist - die Verzweigung im Bereich der Abzweigung in eine Injektionsform eingelegt und die Bereiche 20 und 21 zwischen den Stirnseiten der Schlauühabschnitte 6, 7 und 8 mit einer vulkanisierbaren Kautschukmischung entsprechend dem Schlauchrohmaterial ausgefüllt und anschließend ausvulkanisiert. Damit ergibt sich einmal eine zusätzliche Verbindung der Schlauchabschnitte 6, 7 und 8, ein besseres optisches Aussehen und es wird verhindert, daß durch im Laufe des Betriebes evtl. auftretende Undichtigkeiten zwischen den Schlauchabschnitten und dem Verzweigungsrohrstück 2 Flüssigkeit über einen evtl. verbleibenden Spalt austreten kann.

Mit dem beschriebenen Verfahren ist es also möglich, auch an überlangen Schläuchen ohne einen wieder zu demontierenden formkern, sondern vielmehr mit einem als verlorenen formkern anzusehenden und im Schlauch verbleibenden Verzweigungsrohrstück eine Schlauchverzweigung auszuformen, wobei darüber hinaus problemlos eine dauerhafte Verbindung zwischen zwei an sich nicht mehr reaktiven Teilen, nämlich den bereits ausvulkanisierten Schlauchabschnitten und einem Rohrstück aus Metall oder Kunststoff, geschaffen wurde.

Wie ferner aus Fig. 2 zu ersehen ist, kann mit dem erfindungsgemäßen Verfahren auch eine Schlauchverzweigung auf einfache Weise an einer Stelle geschaffen werden, an der sich der zu verbindende Schlauchabschnitt 6 stark verjüngt und der Schlauchabschnitt 7 als Krümmer ausgebildet ist, wobei schon hier das Einführen eines Formkerns problematisch wäre.

Das dargestellte Ausführungsbeispiel zeigt als einfachste Form die Ausbildung einer T-förmigen Schlauchverzweigung. Es ist aber nach dem gleichen Grundprinzip möglich, beispielsweise auch kreuzförmige Schlauchverzweigungen zu schaffen oder aber solche, bei denen an einer oder mehreren dicht nebeneinanderliegenden Stellen mehrere Abzweige abgehen, wobei diese Abzweige in ein und derselben oder aber auch in mehreren Ebenen liegen und einen von 90° abweichenden Winkel zum Hauptrohr aufweisen können.

## Patentansprüche

1. Verfahren zur Herstellung einer Verzweigung (1) bei Formschläuchen aus Gummi, insbesondere Kraftfahrzeug-Kühlwasserschläuchen, in dem auf die freien Rohrstutzen (3,4,5) eines Verzweigungsrohrstückes (2) aus Metall oder Kunststoff ausvulkanisierte Schlauchabschnitte (6,7,8) geschoben werden, dadurch gekennzeichnet, daß die Stirnkanten (10,11,12) der freien Rohrstutzen (3,4,5) aufgeweitet werden und zwischen den mit Haftvermittler versehenen Rohrstutzen (3,4,5) und den Schlauchabschnitten (6,7,8) eine vulkanisierbare Klebemasse (13,14,15) angeordnet wird, die dann unter vorgegebener Temperatur zwecks Herstellung einer festen Verbindung zwischen Schlauchabschnitt (6,7,8) und Rohrstutzen (3,4,5) ausvulkanisiert wird.

2. Verfahren nach Anspruch 1, dadurch gekennzeichnet, daß als vulkanisierbare Klebemasse folienartige Streifen aus Schlauchrohmaterial verwendet werden.

3. Verfahren nach Anspruch 1 oder 2, dadurch gekennzeichnet, daß der freiliegende Bereich (20, 21) des Verzweigungsrohrstückes (2) zwischen den Stirnseiten der Schlauchabschnitte (6,7,8) zur zusätzlichen Verbindung im Injektionsverfahren mit Schlauchrohmaterial ausgefüllt und ausvulkanisiert wird.

4. Verzweigung von formschläuchen aus Gummi, insbesonders Kraftfahrzeug-Kühlwasserschläuche, bei der sich auf freien Rohrstutzen (3,4,5) eines Verzweigungsrohrstückes (2) aus Metall oder Kunststoff ausvulkanisierte Schlauchabschnitte (6,7,8) befinden, dadurch gekennzeichnet, daß die Rohrstutzen (3,4,5) nach außen aufgeweitete Stirnkanten (10,11,12) zur Distanzhalterung für eine vulkanisierbare Klebemasse (13,14,15) besitzen und als Verbindung zwischen Rohrstutzen (3,4,5) und Schlauchabschnitt (6,7,8) eine in situ ausvulkanisierte Klebemasse (13,14,15) bzw. ein in situ ausvulkanisiertes Schlauchmaterial (13,14,15) angeordnet ist.

5. Verzweigung von Formschläuchen nach Anspruch 4, dadurch gekennzeichnet, daß durch injektiertes, in situ vulkanisiertes Schlauchmaterial ein Verbund im Bereich (20,21), der von den Stirnseiten der Schlauchabschnitte (6,7,8) und dem Verzweigungsrohrstück (2) begrenzt ist, vorliegt.

## Claims

1. A process for the production of a bifurcation (1) in moulded flexible tubes made of rubber, in particular motor vehicle water cooling tubes, in whic process tube sections (6,7,8) which have been fully cured are slipped in to the free pipe connection pieces (3,4,5) of a bifurcation pipe piece (2) made of metal plastic, characterized in that the tips (10, 11, 12) the free pipe connection pieces (3,4,5) widen and a bonding substance (13,14,15) which can be cured is placed between the pipe connection pieces (3,4,5) which are provided with an adhesive and the tube sections (6,7,8) which is then fully cured at a prescribed temperature for the purpose of producing a firm connection between tube section (6,7,8) and pipe connection pieces (3,4,5).

2. A process according to claim 1, characterised in that foil-like strips made of raw tube material are use as the bonding substance which can be cured.

3. A process according to claim 1 or 2, characterized in that the open area (20, 21) of the bifurcation pipe piece (2) is filled with raw tube material between the facing sides of the tube sections (6,7,8) for the purpose of an aditional connection, in the injection process, and is fully cured.

4. The bifurcation of moulded flexible tubes made of rubber, in particular motor vehicle water cooling tubes, in which tube sections (6,7,8) which have been fully cured are situated in free pipe connection pieces (3,4,5) of a bifurcation pipe piece (2) made of metal or plastic, characterized in that the pipe connection pieces (3,4,5) have tips (10,11,12) which widen outwardly for the purpose of positioning a bonding substance (13,14,15) which can be cured, and a bonding substance (13,14,15) which has been fully cured in situ andtor a tube material (13,14,15) which has been fully cured in situ is placed between pipe connection pieces (3,4,5) and tube section (6,7,8) as a connection.

5. The bifurcation of moulded flexible tubes according to claim 4, characterised in that a bond is present in the area (20, 21) which is delimited by the facing sides of the tube sections (6,7,8) and the bifurcation pipe piece (2) by means of tube material which has been injected, and which has been cured in situ.

## Revendications

1. Procédé de fabrication d'un raccord de dérivation (1) pour tuyau souple moulé en caoutchouc, notamment de tuyau souple pour l'eau de refroidissement d'un véhicule automobile, qui consiste à enfiler des tronçons de tuyau souple (6, 7, 8) vulcanisés sur les embouts libres (3, 4, 5) d'une pièce tubulaire de raccordement (2) en métal ou en matière plastique, caractérisé en ce qu'il consiste à élargir les bords frontaux (10, 11, 12) des embouts libres (3, 4, 5) et à interposer entre les embouts (3, 4, 5) munis d'un agent adhésif et les tronçons de tuyau souple (6, 7, 8) une composition de colle (13, 14, 15), qui est ensuite vulcanisée à une température prescrite en vue de réaliser une liaison rigide entre les tronçons de tuyau souple (6, 7, 8) et les embouts (3, 4, 5).

2. Procédé suivant la revendication 1, caractérisé en ce qu'il consiste à utiliser comme composition de colle susceptible d'être vulcanisée des bandes de type en feuille en matériau pour tuyau souple.

3. Procédé suivant la revendication 1 ou 2, caractérisé en ce qu'il consiste à remplir la région (20, 21) dégagée de la pièce tubulaire de raccordement (2), comprise entre les faces frontales des tronçons de tuyau souple (6, 7, 8), de matériau pour tuyau souple, en vue d'obtenir une liaison supplémentaire dans le procédé d'injection et à la vulcaniser.

4. Raccord de dérivation pour tuyau souple moulé en caoutchouc, notamment de tuyau souple pour l'eau de refroidissement d'un véhicule automobile, dans lequel des tronçons de tuyau souple (6, 7, 8) vulcanisés se trouvent sur les embouts libres (3, 4, 5) d'une pièce tubulaire de raccordement (2) en métal ou en matière plastique, caractérisé en ce que les embouts (3, 4, 5) possèdent des bords frontaux (10, 11, 12) élargis vers l'extérieur pour le maintien à distance d'une composition de colle (13, 14, 15) susceptible d'être vulcanisée, et une masse de colle (13,14, 15) vulcanisée in situ, ou un matériau pour tuyau souple (13, 14, 15) vulcanisé in situ est disposé en tant que liaison entre les embouts (3, 4, 5) et les tronçons de tuyau souple (6, 7, 8).

5. Raccord de dérivation pour tuyau souple moulé suivant la revendication 4, caractérisé en ce que, par du matériau pour tuyau souple injecté et vulcanisé in situ, une liaison est réalisée dans la région (20, 21), délimitée par les côtés frontaux des tronçons de tuyau souple (6, 7, 8) et par la pièce tubulaire de raccordement (2).

FIG. 1

FIG. 2